# EUROPÄISCHE PATENTSCHRIFT

(11) **EP 0 404 992 B1**
(45) Veröffentlichungstag und Bekanntmachung des Hinweises auf die Patenterteilung: **24.08.1994**
(21) Anmeldenummer: 89111975.2
(22) Anmeldetag: 30.06.1989
(51) Int. Cl.: G05B 9/03

(54) **Verfahren zum hochverfügbaren Betrieb von redundanten Datenverarbeitungsanlagen**
Method for operating with a high availability redundant data-processing units
Procédé de fonctionnement à haute disponibilité de dispositifs redondants de traitement de données

(43) Veröffentlichungstag der Anmeldung: 02.01.1991
(73) Patentinhaber: SIEMENS AKTIENGESELLSCHAFT, 80333 München (DE)
(72) Erfinder: Barthel, Herbert, D-8522 Herzogenaurach (DE); Daar, Horst, Dr., D-8520 Erlangen (DE)

(56) Entgegenhaltungen:
- DE-A- 3 411 837
- DE-A- 3 633 953
- FR-A- 2 561 410

## Beschreibung

Hochverfügbare, redundante Datenverarbeitungsanlagen bzw. Systeme von redundanten Datenverarbeitungsanlagen, werden überall dort benötigt, wo die Auswirkungen von Fehlern der Datenverarbeitung z.B. auf einen zu steuernden technischen Prozeß nicht tolerierbar sind. Beim Auftreten eines Fehlers einer Datenverarbeitungsanlage müssen dann die redundanten Hard- und/oder Softwarekomponenten die Steuerung des technischen Prozesses übernehmen.

Um die hochverfügbaren Eigenschaften von redundanten Datenverarbeitungsanlagen, wie sie insbesondere bei speicherprogrammierbaren Automatisierungssystemen verwirklicht sind, zu garantieren, genügt es jedoch nicht, daß bei einem Ausfall oder bei fehlerhaftem Betrieb einer Datenverarbeitungsanlage eine weitere, am redundanten Betrieb beteiligte Datenverarbeitungsanlage die Steuerung des technischen Prozesses übernimmt, sondern es müssen Maßnahmen getroffen werden, die die Funktionsfähigkeit aller Datenverarbeitungsanlagen immer wieder testen und auftretende Fehler erkennen lassen. Diese Tests der Datenverarbeitungsanlagen werden als sogenannte Selbsttests vom jeweiligen Steuerprogramm einer Datenverarbeitungsanlage durchgeführt.

So ist beispielsweise in der DE 36 33 953 Al ein Verfahren zum hochverfügbaren Betrieb von mindestens zwei, über eine Kommunikationsvorrichtung verbundenen, redundanten Datenverarbeitungsanlagen zur Steuerung eines technischen Prozesses beschrieben, bei dem
a) jede Datenverarbeitungsanlage über Ein-/Ausgabeeinheiten von dem zu steuernden Prozeß Eingangssignale einlesen und an den zu steuerenden Prozeß Ausgangssignale ausgeben kann und
b) für jede Datenverarbeitungsanlage identische Steuerprogramme vorgesehen sind, die ein aus Testabschnitten bestehendes Testprogramm zur automatischen Fehlererkennung und -lokalisierung der Hardware inclusive der Ein-/Ausgabeeinheiten aufweisen.

Bei der DE-36 33 953 Al wird der Selbsttest jedoch vom Betriebssystem in Abhängigkeit von der momentanen Prozeßbelastung in den Programmablauf eingestreut. Der damit zwangsläufig in bestimmten Zeitabschnitten herbeigeführte, in vielen Fälle sehr zeitaufwendige Selbsttest ist zwar bei sicherheitsgerichteten Automatisierungssystemen zwingend vorgeschrieben, führt aber dazu, daß solche Automatisierungssysteme für andere Anwendungen relativ unflexibel sind, da der Anwender keinen Einfluß auf den Test sowie auf die Zeiten, zu denen ein Testabschnitt bzw. der Test durchgeführt wird, nehmen kann.

Zur Erhaltung der Hochverfügbarkeits-Eigenschaft der redundanten Datenverarbeitungsanlagen bzw. Automatisierungsgeräte ist eine schnelle Beseitigung der durch einen Test erkannten Fehler notwendig. Dies wird umso rascher möglich sein, wenn ein Testverfahren die Lokalisierung eines Fehlers mit einschließt oder zumindest eine unmittelbare Fehlerlokalisierungsroutine eingeleitet wird, ohne daß die Steuerung eines technischen Prozesses davon beeinflußt wird.

Aufgabe der Erfindung ist es, ein Testverfahren zum hochverfügbaren Betrieb von mindestens zwei Datenverarbeitungsanlagen zu schaffen, bei dem erkannte Fehler rückwirkungsfrei für einen technischen Prozeß lokalisiert werden können.

Gemäß der Erfindung wird diese Aufgabe bei einem Verfahren wie es aus der DE-36 33 953 Al bekannt ist dadurch gelöst, daß der Zeitpunkt sowie die Anzahl der durchzuführenden Testabschnitte vom Anwender vorgebbar ist. Weiterhin sind die Steuerprogramme für die Datenverarbeitungsanlagen aus Programmbausteinen zusammengesetzt.

Die Rückwirkungsfreiheit wird dabei dadurch erreicht, daß der Anwender durch die Vorgabe von Zeitpunkt und Anzahl der durchzuführenden Testabschnitte selbst den Einfluß des Testprogramms auf seinen Prozeß bestimmt. Er kann also beispielsweise den gesamten Selbsttest während unkritischer Steuerungsphasen durchführen.

Damit ein Testabschnitt für redundante Ein-Ausgabeeinheiten diesen richtig zugeordnet wird, erweist es sich als vorteilhaft, daß die redundanten Ein-Ausgabeeinheiten bei der Programmierung bzw. bei der Projektierung eines redundanten Prozeßablaufs vom Anwender vorgebbar sind und das identische Steuerprogramm den erforderlichen Testabschnitt den redundanten Ein-Ausgabeeinheiten automatisch zuordnet.

Eine weitere Vereinfachung der Zuordnung von Testabschnitten an redundante Ein-Ausgabeeinheiten kann dadurch vorgenommen werden, daß die redundanten Ein-Ausgabeeinheiten sich gegenüber den jeweiligen Datenverarbeitungsanlagen selbsttätig identifizieren und das identische Steuerprogramm den erforderlichen Testabschnitt den redundanten Ein-Ausgabeeinheiten automatisch zuordnet. Dies könnte beispielsweise dadurch geschehen, daß Ein-Ausgabeeinheiten eine besondere Kennung erhalten, z.B. über die Steckerleiste, durch die sie mit dem Automatisierungsgerät verbunden werden, oder aber durch eine Kennung, die in Form eines Codewortes in einem der Ein-Ausgabeeinheit zugehörigen Speicherplatz abgelegt sein könnte und die vom Betriebssystem der Datenverarbeitungsanlage automatisch abgefragt würde. In beiden Fällen könnten die Datenverarbeitungsanlagen über die vorgesehene Kommunikationsvorrichtung ihre Informationen über erkannte redundante Ein-Ausgabeeinheiten austauschen, wobei diese Informationen mindestens die Adresse und den Typ der Baugruppe beinhalten sollten.

Weitere vorteilhafte Ausgestaltungen der Erfindung sind Gegenstand der Unteransprüche. Auf sie wird im Zusammenhang mit der Figurenbeschreibung noch näher eingegangen.

Eine Ausbildung der Erfindung ist in der Zeichnung dargestellt und wird im folgenden näher beschrieben. Dabei zeigen:
- FIG 1 und 3: jeweils ein Blockschaltbild von zwei redundanten Prozeßsteuernden Datenverarbeitungsanlagen mit zugeordneten Ein-Ausgabebaugruppen,
- FIG 2 und 4: jeweils ein Blockschaltbild eines zweikanalig gesteuerten Prozesses.

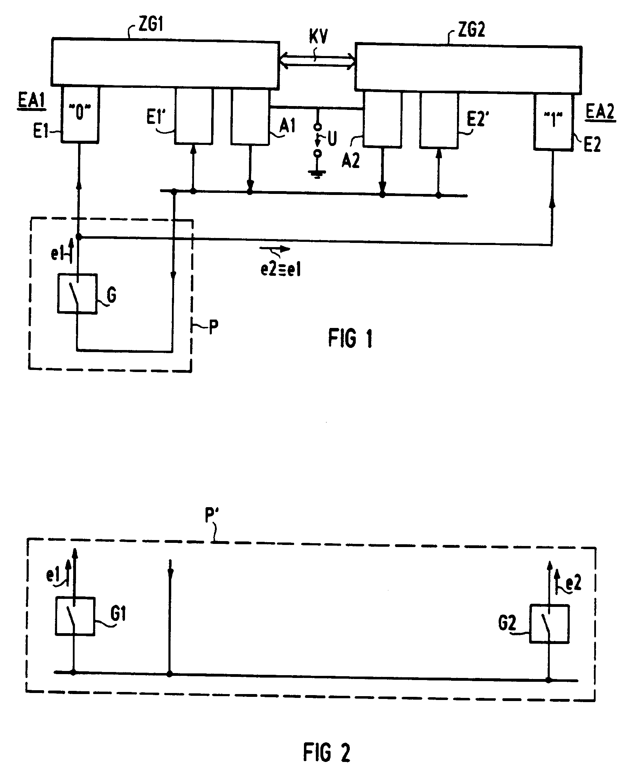

FIG 1 zeigt zwei redundante Datenverarbeitungsanlagen ZG1, ZG2 die beispielsweise Zentralgeräte von Automatisierungsgeräten sein können. Die Begriffe Datenverarbeitungsanlage, Automatisierungsgerät bzw. Zentralgerät werden deshalb im folgenden synonym verwendet.

Beide Datenverarbeitungsanlagen ZG1, ZG2 können mit verschiedenen Baugruppen bestückt werden. Beispielsweise können bei herkömmlichen Automatisierungsgeräten die für eine jeweilige Funktion benötigten Baugruppen als sogenannte Flachbaugruppen in einen dafür vorgesehenen Steckplatz eines Zentralgerätes ZG1, ZG2 angebracht werden. Um die für die Erfindung wesentlichen Ein-Ausgabeeinheiten EA1, EA2 hervorzuheben, sind diese vor die Datenverarbeitungsanlagen ZG1, ZG2 gezeichnet. Sie bestehen aus einer in dicken Linien ausgeführten Eingabeeinheit E1 bzw. E2, einer Eingabeeinheit E1′ bzw. E2′ sowie aus einer Ausgabeeinheit A1 bzw. A2. Die Ausgabeeinheiten A1 und A2, werden mit einer Spannung U versorgt und versorgen ihrerseits die Signalgeber und Stellglieder eines technischen Prozesses P, d.h. die Schalter, Ventile etc. mit der durchgeschleiften Spannung U.

Die beiden Datenverarbeitungsanlagen sind über eine Kommunikationsvorrichtung KV miteinander verbunden. In FIG 1 ist diese Kommunikationsvorrichtung KV als Bus ausgeführt. Zur Kommunikationsvorrichtung KV kann jedoch ebenso eine Baugruppe gehören, die die Kommunikationsvorgänge vermittelt und überwacht und die einer oder beiden Datenverarbeitungsanlagen ZG1, ZG2 zugeordnet sein kann.

Für den redundanten Betrieb beider Datenverarbeitungsanlagen ZG1, ZG2 wird beispielsweise über die Kommunikationsvorrichtung KV die Synchronisation des Programmablaufs beider Datenverarbeitungsanlagen ZG1, ZG2 vermittelt. Zu diesem Zweck verfügt jede Datenverarbeitungsanlage über dasselbe, identische Steuerprogramm, das beispielsweise aus einem Betriebssystem und einem Anwenderprogramm zusammengesetzt sein kann. Dieses identische Steuerprogramm enthält u.a. Programmbausteine, die die Synchronisation, den Anlauf, die Ankopplung von Reservegeräten, die Umschaltung der Prozeß führung vom Master auf ein Reservegerät etc., bewirken. Außerdem enthält es Testprogramme zur automatischen Fehlererkennung und Lokalisierung der Hardware inklusive der Ein-Ausgabeeinheiten EA1, EA2. Die einzelnen Testabschnitte oder Testmodule des Testprogramms werden dabei nach Anwenderangaben während des Betriebs der Datenverarbeitungsanlagen ZG1, ZG2 eingestreut und testen zyklisch beispielsweise die CPU, die Schreib-Lese-Speicher, die Arithmetiklogikeinheit und die angeschlossene Peripherie etc. Beim Anlauf der redundanten Datenverarbeitungsanlagen kann das Testprogramm zunächst ganz ausgeführt werden, während im Betrieb die einzelnen Testabschnitte in Zeiträumen von beispielsweise 5 ms dann ausgeführt werden können, wenn die Belastung der Datenverarbeitungsanlagen durch den zu steuernden Prozeß gering ist. Diese Zeiten können dabei vom Anwender frei gewählt werden und während des Betriebs einer Datenverarbeitungsanlage oder bei der Projektierung eines zu steuernden technischen Prozesses, d.h. eines Programmablaufs fest vorgegeben werden. Durch die Einstreuung der Testabschnitte nach Anwendervorgaben wird der Test transparent für die übrige Software im Hintergrund ausgeführt, bis ein Fehler erkannt wird.

Zur Fehlererkennung von redundanten Ein-Ausgabeeinheiten EA1, EA2, müssen die jeweilige Datenverarbeitungsanlagen ZG1, ZG2 erst Kenntnis davon haben, welche ihrer Baugruppen bzw. ihrer Ein-Ausgabeeinheiten eine redundante Ein-Ausgabeeinheit ist. Dies kann beispielsweise bei der Projektierung eines Prozeßablaufs geschehen. Zur Programmierung eines redundanten Prozeßablaufs kann ein Eingabegerät nur an eine der Datenverarbeitungsanlagen ZG1, ZG2 angeschlossen werden. Die Programmierung erfolgt dann so wie bei einem einkanaligen Gerät. Lediglich bei der Vorgabe der Konfiguration der Datenverarbeitungsanlage muß der Anwender angeben, welche Baugruppen redundante Baugruppen sind. Nach Abschluß der Projektierung bzw. Programmierung werden den übrigen Beteiligten Datenverarbeitungsanlagen ZG1, ZG2, hier der zweiten Datenverarbeitungsanlage ZG2, die Daten über die Kommunikationsvorrichtung KV mitgeteilt, so daß diese ebenfalls über das gleiche, identische Steuerprogramm wie die erste Datenverarbeitungsanlage ZG1, verfügt und damit auch Kenntnis der redundanten Baugruppen besitzt. Bei einem verbesserten Verfahren, können diese Baugruppen sich selbsttägig gegenüber der Datenverarbeitungsanlage identifizieren. Dies kann Beispiel über entsprechende Hard- und Software die den jeweiligen Ein-Ausgabebaugruppen EA1, EA2 zugeordnet ist geschehen, oder über eine einfache Codierung der Steckerleisten, über die sie mit den Datenverarbeitungsanlagen ZG1, ZG2 verbunden werden.

Nach der Identifizierung werden den redundanten Ein-Ausgabebaugruppen EA1, EA2 die entsprechenden Testabschnitte automatisch zugeordnet.

Über die redundanten Eingabeeinheiten E1, E2 werden Signale e1, e2 eines technischen Prozesses P von jeder Datenverarbeitungsanlage ZG1, ZG2 als Eingangssignale e1, e2 eingelesen. Die Eingangssignale e1, e2 werden dabei von einem Signalgeber G erhalten und sind deshalb identisch.

Wie in FIG 2 gezeigt, können die Eingangssignale e1 und e2 aber auch von redundanten Signalgebern G1, G2 eines technischen Prozesses P′ erhalten werden.

Die Fehlererkennung geschieht in beiden Fällen jedoch auf gleiche Weise, indem die Diskrepanzzeiten der Eingangssignale e1, e2 durch einen Testabschnitt des Testprogramms überwacht werden. Solche Diskrepanzzeiten ergeben sich in der Praxis z.B. aus unterschiedlichen Signallaufzeiten oder aus unterschiedlichen, konstruktiv bedingten Schaltzeiten der jeweiligen Signalgeber G, G1, G2 oder aus anderen Gründen. Die maximalen Diskrepanzzeiten können dabei beispielsweise durch Testläufe ermittelt werden. Wird eine jeweils für einen bestimmten Signalgeber G oder für redundante Signalgeber G1, G2 vorgegebene Diskrepanzzeit überschritten, so wird automatisch die Fehlerlokalisierung von der Datenverarbeitungsanlage eingeleitet. Dazu wird die Schaltspannung der Signalgeber G bzw. G1, G2 über die Ausgabeeinheit A1, A2 unterbrochen. Zur Kontrolle kann dazu der Wert der Schaltspannung U über die Eingabeeinheiten E1′ und E2′ zurückgelesen werden. Danach wird geprüft, ob die redundante Eingabeeinheit E1, E2 die bisher ein Signal logisch "1" angezeigt hat nun ein Signal logisch "0" anzeigt. Falls das Prüfergebnis mit "ja" beantwortet wird, ist die Eingabeeinheit E2 bzw.E1 der jeweils anderen Datenverarbeitungslage ZG2 bzw. ZG1 defekt, und das von dieser eingelesene Eingangssignal e2 bzw. e1 wird passiviert.

Im Ausführungsbeispiel der FIG 1 liest die Datenverarbeitungsanlage ZG1 über die Eingabeeinheit E1 ein Signal logisch "0" ein, die Datenverarbeitungsanlage ZG2 erhält über die Eingabeeinheit E2 ein Signal logisch "1". Nach Ablauf der vorgegebenen Diskrepanzzeit haben sich die Eingangssignale e1, e2 nicht geändert. Dieser erkannte Fehler führt zu einem Anstoß des Testabschnittes für die redundanten Eingabeeinheiten E1, E2. Die Spannungsversorgung U der Ausgabeeinheiten A1, A2, die die Spannungsversorgung der Signalgeber G bzw. G1, G2 bewirken, wird daraufhin unterbrochen, und über die Eingabeeinheiten E1′, E2′ wird die Unterbrechung überprüft. Falls das Eingangssignal e2 = logisch "1" nicht auf den Wert logisch "0" wechselt, ist die Eingabeeinheit E2 defekt, und das eingelesene Eingangssignal e2 wird von der Datenverarbeitungsanlage passiviert. Falls das Eingangssignal e2 = logisch "1" seinen Wert in logisch "0" ändert, ist die Eingabeeinheit E1 defekt, und das von der Datenverarbeitungsanlage ZG1 eingelesene Eingangssignal E1 wird passiviert. Der erkannte und lokalisierte Fehler kann beispielsweise über ein Datensichtgerät, das an eine oder beide Datenverarbeitungsanlagen ZG1, ZG2 angeschlossen sein kann, mit Angabe der Adresse der Eingabeeinheit E1, E2 gemeldet werden. Für die Zeit, in der eine Eingabeeinheit E1, E2 ausgefallen ist, können die Daten, die über die verbleibende intakte Eingabeeinheit E1, E2 eingelesen werden, über die Kommunikationsvorrichtung KV der oder den weiteren redundanten Datenverarbeitungsanlagen ZG1, ZG2 übermittelt werden, so daß diese auch weiterhin über ein korrektes Prozeßabbild des technischen Prozesses P verfügen.

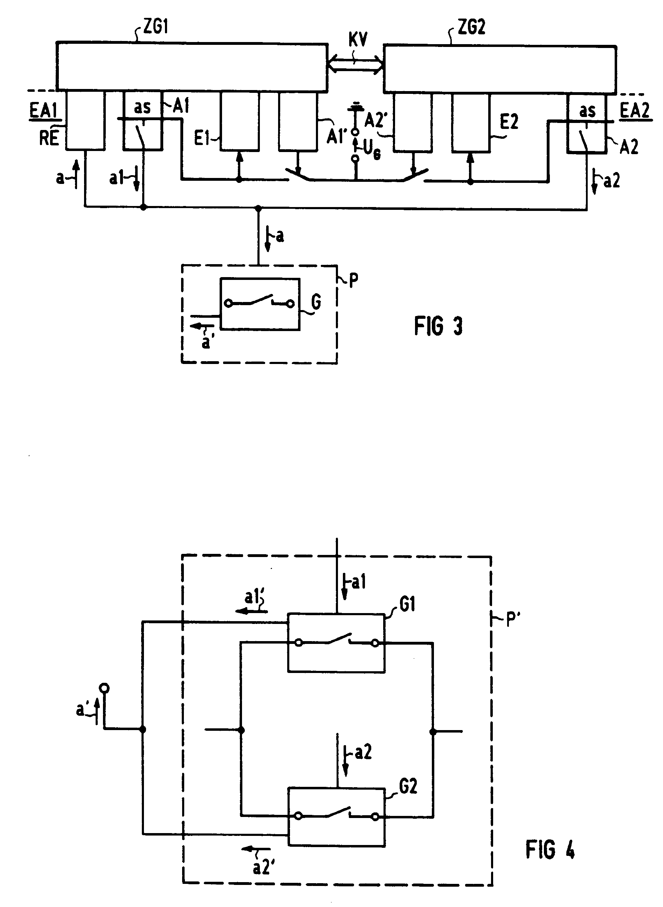

FIG 3 zeigt zwei Datenverarbeitungsanlagen ZG1, ZG2, die wieder über eine Kommunikationsvorrichtung KV verbunden sind. Diese Datenverarbeitungsanlagen ZG1, ZG2 sind mit Ein-Ausgabeeinheiten EA1, EA2 für die Ausgabe von Ausgangssignalen a1, a2 über die Ausgabeeinheiten A1, A2 bestückt. Zur Fehlererkennung und Lokalisierung sind weiterhin eine der Datenverarbeitungsanlage ZG1 zugeordnete Rückleseeinheit RE, jeweils eine Ausgabeeinheit A1′, A2′, über die die Spannungsversorgung der Ausgabeeinheiten A1, A2 unterbrochen werden kann, sowie über jeweils eine Eingabeeinheit E1, E2, über die die Stromversorgung der Ausgabeeinheiten A1, A2 kontrolliert werden kann, bestückt. Die bei funktionierenden Ausgabeeinheiten A1, A2 dem Ausgangssollsignal as entsprechenden, identischen Ausgangsistsignale a1, a2 werden zu einem Ausgangsistsignal a zusammengeführt, das einen Signalgeber G eines technischen Prozesses P schaltet. Die Ausgangssignale a1, a2 können aber ebenso jeweils einen redundanten Signalgeber G1, G2 eines technischen Prozesses P′ schalten wie in FIG 4 gezeigt.

Die beiden Ausgangssignale a1, a2 werden zu einem Ausgangsistsignal a zusammengeführt, das über die Rückleseeinheit RE von der Datenverarbeitungsanlage ZG1 kontrolliert wird, indem es mit dem Ausgangssollsignal as verglichen wird. Dieser Vergleich kann vorteilhaft dann vorgenommen werden, wenn das Ausgangssollsignal as gleich Null ist. Liest die Datenverarbeitungsanlage ZG1 über die Rückleseeinheit RE als Ausgangsistsignal a einen Wert verschieden von Null ein, so ist eine der Ausgabeeinheiten A1 oder A2 defekt. Welche der beiden Ausgabeeinheiten A1 oder A2 defekt ist, kann dadurch überprüft werden, daß durch die Ausgabeeinheit A1′ die Stromversorgung der Ausgabeeinheit A1 unterbrochen wird. Die Unterbrechung der Stromversorgung kann über die Eingabeeinheit E1 überprüft werden. Da nun das Ausgabeistsignal al passiviert ist, d.h. den Wert "0" aufweist, entspricht das Ausgangsistsignal a dem Ausgangsistsignal a2 der Ausgabeeinheit a2. Falls dieses jetzt identisch mit dem Ausgangssollsignal as ist, ist die Ausgabeeinheit A1 defekt, andernfalls ist die Ausgabeeinheit A2 defekt. Nach Feststellung der defekten Ausgabeeinheit A1,A2 wird diese automatisch passiviert, indem die Stromversorgung der Ausgabeeinheit A1 bis zur Reparatur unterbrochen bleibt und somit der Fehler keine Auswirkungen auf den Prozeß P hat. Die Fehlermeldung kann dabei beispielsweise über ein Datensichtgerät erfolgen. Falls mehrere Datenverarbeitungsanlagen ZG1, ZG2 am redundanten Betrieb beteiligt sind, kann sukzessive durch Ausschalten von n-1 Ausgabeeinheiten A1, A2 jede verbleibende Ausgabeeinheit A1, A2 auf die gleiche Weise geprüft werden.

Anstelle des Ausgangsistsignals a, das sich aus den Ausgangsistsignalen a1, a2 zusammensetzt, kann von der Rückleseeinheit RE auch das Ausgangsistsignal a′ des Gebers G bzw. das Ausgangsistsignal a′ der Geber G1, G2 des Prozesses P′ in FIG 4 eingelesen werden. Die Fehlerlokalisierung kann damit auf gleiche Weise wie oben beschrieben durchgeführt werden. In diesem Fall würde die gesamte Strecke zwischen Ausgabeeinheit A1, A2 und Geber G bzw. G1, G2 des Prozesses P bzw. P′ überwacht werden.

Die Ausgabeeinheiten A1, A2 lassen sich vorteilhaft bei einem betriebsmäßigen Flankenwechsel von einem Signal logisch "0" auf ein Signal logisch "1" testen, d.h. daraufhin überprüfen, ob die jeweilige Ausgabeeinheit das Signal logisch "1" annimmt. Durch diesen, während einer betriebsmäßigen Signaländerung durchgeführten Test ist sichergestellt, daß der technische Prozeß nicht beeinflußt wird.

Zusätzlich zur Kommunikationsvorrichtung KV können die Datenverarbeitungsanlagen ZG1, ZG2 über weitere redundante Kommunikationsvorrichtungen bzw. Bussysteme verfügen. Dabei können die über jedes Bussystem gesendeten bzw. empfangenen redundanten Informationen über den Kommunikationsvorrichtungen KV zugehörige Baugruppen bezüglich ihrer Identität geprüft werden, wobei bei auftretenden Differenzen ebenfalls eine Fehlermeldung erfolgt.

## Patentansprüche

1. Verfahren zum hochverfügbaren Betrieb von mindestens zwei, über eine Kommunikationsvorrichtung (KV) verbundenen, redundanten Datenverarbeitungsanlagen (ZG1,ZG2) zur Steuerung eines technischen Prozesses (P,P′),
a) wobei jede Datenverarbeitungsanlage (ZG1,ZG2) über Ein-Ausgabeeinheiten (EA1,EA2) von dem zu steuernden Prozeß (P,P′) Eingangssignale (e1,e2) einlesen und an den zu steuernden Prozeß (P,P′) Ausgangssignale (a1,a2) ausgeben kann,
b) wobei für jede Datenverarbeitungsanlage (ZG1,ZG2) ein aus Programmbausteinen zusammengesetztes identisches Steuerprogramm vorgesehen ist, das ein aus Testabschnitten bestehendes Testprogramm zur automatischen Fehlererkennung und -lokalisierung der Hardware inklusive der Ein-Ausgabeeinheiten (EA1,EA2) aufweist und
c) wobei der Zeitpunkt sowie die Anzahl der durchzuführenden Testabschnitte vom Anwender vorgebbar ist.

2. Verfahren nach Anspruch 1, **dadurch gekennzeichnet**, daß die redundanten Ein-Ausgabeeinheiten (EA1,EA2) bei der Programmierung eines redundanten Prozeßablaufs vom Anwender vorgebbar sind und das identische Steuerprogramm den erforderlichen Testabschnitt den redundanten Ein-Ausgabeeinheiten (EA1,EA2) automatisch zuordnet.

3. Verfahren nach Anspruch 1, **dadurch gekennzeichnet**, daß die redundanten Ein-Ausgabeeinheiten (EA1,EA2) sich gegenüber den jeweiligen Datenverarbeitungsanlagen (ZG1,ZG2) selbsttätig identifizieren und das identische Steuerprogramm den erforderlichen Testabschnitt den redundanten Ein-Ausgabeeinheiten (EA1,EA2) automatisch zuordnet.

4. Verfahren nach einem der vorhergehenden Ansprüche, **dadurch gekennzeichnet**, daß die Diskrepanzzeiten redundanter Eingangssignale (e1,e2) überwacht werden und bei Überschreitung einer Diskrepanzzeit eine automatische Fehlerlokalisierung nach folgenden Verfahrensschritten eingeleitet wird:
a) Die Spannungsversorgung (U) der redundanten Signalgeber wird unterbrochen,
b) falls eine redundante Eingabeeinheit (E1,E2), die ein von "Null" verschiedenes Eingangssignal (e1,e2) anzeigt, ihren Signalzustand nicht ändert, wird sie passiviert und eine Fehlermeldung, die die Adresse der Eingabeeinheit (E1,E2) beinhaltet, ausgegeben,
c) die Spannungsversorgung der redundanten Geber wird wieder eingeschaltet.

5. Verfahren nach einem der vorhergehenden Ansprüche, **dadurch gekennzeichnet**, daß ein Test der redundanten Ausgabevorrichtungen (A1,A2) nach folgenden Verfahrensschritten vornehmbar ist:
a) Das Ausgangssignal (a) der redundanten n-Ausgabevorrichtungen (A1,A2) wird von einer Rückleseeinrichtung (RE), die einer redundanten Datenverarbeitungsanlage (ZG1,ZG2) zugeordnet ist, gelesen und mit dem von den redundanten Datenverarbeitungsanlagen (ZG1,ZG2) vorgegebenen Ausgangssollsignal (as) verglichen,
b) falls das Ausgangsistsignal (a) vom Ausgangssollsignal (as) abweicht, wird sukzessive die Stromversorgung von jeweils n -1 Ausgabevorrichtungen unterbrochen, wobei jeweils ein Vergleich zwischen Ausgangssoll- (as) und Ausgangsistsignal (a1,a2) durchgeführt wird,
c) bei einer Differenz des Ausgangsistsignals (a1,a2) einer jeweils verbleibenden Ausgabevorrichtung (A1,A2) zum Ausgabesollsignal (as) erfolgt eine Fehlermeldung mit Angabe der Adresse der Ausgabevorrichtung (A1,A2), wobei die Stromversorgung der fehlerhaften Ausgabevorrichtung (A1,A2) solange unterbrochen bleibt, bis der Fehler behoben ist.

6. Verfahren nach einem der vorstehenden Ansprüche, **dadurch gekennzeichnet**, daß jede der redundanten n-Datenverarbeitungsanlage (ZG1,ZG2) an n-Bussysteme angeschlossen ist, wobei die über jedes Bussystem gesendeten bzw. empfangenen identischen Informationen über die Kommunikationsvorrichtung (KV) der Datenverarbeitungsanlage (ZG1,ZG2) bezüglich ihrer Identität geprüft werden.

## Claims

1. Process for the high-availability operation of at least two redundant data processing units (ZG1, ZG2) connected via a communication device (KV), for the control of a technical process (P, P′),
a) whereby each data processing unit (ZG1, ZG2) can read input signals (e1, e2) from the process (P, P′) to be controlled via input/output units (EA1, EA2) and can deliver output signals (a1, a2) to the process (P, P′) to be controlled,
b) whereby for each data processing unit (ZG1, ZG2) an identical control program which has a test program comprised of test sections for the automatic detection and location of faults in the hardware, including the input/output units (EA1, EA2) is provided, and
c) whereby the time and the number of test sections to be carried out can be specified by the user.

2. Process according to Claim 1, characterised in that the redundant input/output units (EA1, EA2) can be specified by the user during the programming of a redundant process sequence and the identical control program automatically assigns the necessary test section to the redundant input/output units (EA1, EA2).

3. Process according to Claim 1, characterised in that the redundant input/output units (EA1, EA2) identify themselves automatically to the respective data processing units (ZG1, ZG2) and the identical control program automatically assigns the necessary test section to the redundant input/output units (EA1, EA2).

4. Process according to one of the preceding claims, characterised in that the discrepancy times of redundant input signals (e1, e2) are monitored and if a discrepancy time is exceeded an automatic fault location cycle is initiated according to the following process steps:
a) The supply voltage (U) of the redundant signal generators is interrupted,
b) if a redundant input unit (E1, E2) that displays an input signal (e1, e2) other than "zero" does not change its signal state, it is shut down and a fault message that contains the address of the input unit (E1, E2) is output,
c) the supply voltage of the redundant generators is switched on again.

5. Process according to one of the preceding claims, characterised in that it shall be possible to carry out a test of the redundant output devices (A1, A2) according to the following process steps:
a) The output signal (a) of the redundant n output devices (A1, A2) is read by a read-back unit (RE) that is assigned to a redundant data processing unit (ZG1, ZG2), and is compared to the reference output signal (as) set by the redundant data processing units (ZG1, ZG2),
b) if the actual output signal (a) deviates from the reference output signal (as), the power supply of each of the n-1 output devices is interrupted in succession, a comparison being carried out in each case between the reference output signal (as) and the actual output signal (a1, a2),
c) in the event of a difference between the actual output signal (a1, a2) of a remaining output device (A1, A2) and the reference output signal (as), a fault message is output with details of the address of the output device (A1, A2), the power supply of the faulty output device (A1, A2) remaining interrupted until the fault is cleared.

6. Process according to one of the preceding claims, characterised in that each of the redundant n data processing units (ZG1, ZG2) is connected to n bus systems, the identity of the identical data transmitted or received via each bus system being checked via the communication device (KV) of the data processing unit (ZG1, ZG2).

## Revendications

1. Procédé de fonctionnement à haute disponibilité d'au moins deux installations redondantes de traitement de données (ZG1, ZG2), reliées par l'intermédiaire d'un dispositif de communication (KV), pour la commande d'un processus technique (P, P′), selon lequel
a) chaque installation de traitement de données (ZG1, ZG2) peut lire des signaux d'entrée (e1, e2) par l'intermédiaire d'unités d'entrée-sortie (EA1, EA2) du processus (P, P′) à commander, et peut délivrer des signaux de sortie (a1, a2) au processus (P, P′) devant être commandé,
b) pour chaque installation de traitement de données (ZG1, ZG2), il est prévu un programme de commande identique, formé par la réunion de modules de programme et qui comportent un programme de test constitué par des sections de test et servant à réaliser l'identification et la localisation automatiques de défauts du matériel, y compris des unités d'entrée-sortie (EA1, EA2), et
c) l'instant ainsi que le nombre des sections de test devant être exécutées peuvent être prédéterminés par l'utilisateur.

2. Procédé suivant la revendication 1, caractérisé par le fait que les unités redondantes d'entrée-sortie (EA1, EA2) peuvent être prédéterminées par l'utilisateur lors de la programmation d'un cycle de processus redondant, et le programme identique de commande associe automatiquement la section de test nécessaire aux unités redondantes d'entrée-sortie (EA1, EA2).

3. Procédé suivant la revendication 1, caractérisé par le fait que les unités d'entrée-sortie (EA1, EA2) s'identifient automatiquement par rapport aux installations respectives de traitement de données (ZG1, ZG2) et que le programme de commande identique associe automatiquement la section de test nécessaire aux unités d'entrée-sortie redondantes (EA1, EA2).

4. Procédé suivant l'une des revendications précédentes, caractérisé par le fait que les durées de divergence de signaux d'entrée redondants (e1, e2) sont contrôlées et que dans le cas du dépassement d'une durée de divergence, une localisation automatique de défaut est déclenchée conformément aux étapes opératoires suivantes :
a) l'alimentation en tension (U) des générateurs de signaux redondants est interrompue,
b) dans le cas où une unité d'entrée redondante (E1, E2), qui indique un signal d'entrée (e1, e2) différent de "0", et que l'état de son signal ne varie pas, cette unité est passivée et une signalisation de défaut, qui inclut l'adresse de l'unité d'entrée (E1, E2), est délivrée,
c) l'alimentation en tension des transmetteurs redondants est à nouveau activée.

5. Procédé suivant l'une des revendications précédentes, caractérisé par le fait qu'un test des dispositifs de sortie redondants (A1, A2) peut être réalisé conformément aux étapes opératoires suivantes :
a) le signal de sortie (a) des n dispositifs de sortie redondants (A1, A2) est lu par un dispositif de lecture (RE), qui est associé à une installation redondante de traitement de données (ZG1, ZG2), et est comparé au signal de consigne de sortie (as), qui est prédéterminé par les installations redondantes de traitement de données (ZG1, ZG2),
b) dans le cas où le signal réel de sortie (a) diffère du signal de consigne de sortie (as), l'alimentation en courant de respectivement (n-1) dispositifs de sortie est interrompue successivement, auquel cas respectivement une comparaison est exécutée entre le signal de consigne de sortie (as) et le signal réel de sortie (a1, a2),
c) dans le cas d'une différence entre le signal réel de sortie (a1, a2) du dispositif de sortie (A1, A2), qui subsiste respectivement, et le signal de consigne de sortie (as), une signalisation de défaut est délivrée avec l'indication de l'adresse du dispositif de sortie (A1, A2), l'alimentation en tension du dispositif de sortie défectueux (A1, A2) restant interrompue jusqu'à ce que le défaut soit supprimé.

6. Procédé suivant l'une des revendications précédentes, caractérisé par le fait que chacune des n unités redondantes de traitement de données (ZG1, ZG2) est raccordée à n systèmes de bus, auquel cas les informations identiques émises et reçues par l'intermédiaire de chaque système de bus sont contrôlées du point de vue de leur identité, par l'intermédiaire du dispositif de communication (KV) de l'installation de traitement de données (ZG1, ZG2).
